# FASCICULE DE BREVET EUROPEEN

(11) **EP 2 841 305 B1**
(45) Date de publication et mention de la délivrance du brevet: **20.04.2016**
(21) Numéro de dépôt: 13701784.4
(22) Date de dépôt: 30.01.2013
(51) Int. Cl.: B60R 13/02, B60J 5/04

(54) **PORTE AVANT DE VEHICULE A FIXATION DE GARNITURE AMELIOREE DANS LA ZONE DU RETROVISEUR**
FAHRZEUG-VORDERTÜR MIT VERBESSERTER FIXIERUNG EINES VERKLEIDUNGSTEILS IM BEREICH DES SPIEGELS
VEHICLE FRONT DOOR WITH IMPROVED FIXING OF TRIM IN MIRROR REGION

(30) Priorité: 26.04.2012 FR 1253854
(43) Date de publication de la demande: 04.03.2015
(73) Titulaire: Renault S.A.S., 92100 Boulogne-Billancourt (FR)
(72) Inventeur: BOUILLON, Jean Charles, F-78940 La Queue Les Yvelines (FR)
(86) Numéro de dépôt international: PCT/EP2013/051773
(87) Numéro de publication internationale: WO 2013/159944

(56) Documents cités:
- JP-A- 8 216 686
- JP-A- 2003 094 949
- JP-A- 2007 126 070
- JP-A- 2011 011 674
- US-A1- 2011 215 612

## Description

La présente invention concerne une porte avant de véhicule automobile, dont une zone avant doit recevoir un rétroviseur extérieur commandable et comporte de ce fait, du côté intérieur de la porte, une pièce d'habillage dite cache-rétroviseur, comme connu par exemple par les documents FR2754502 ou FR2766433, et destinée à abriter les divers organes de commande du rétroviseur.

Une porte avant de véhicule est constituée d'une structure généralement métallique définissant d'une part une baie supérieure obturable par une vitre coulissante et d'autre part une partie inférieure de porte, sous la baie. La structure de porte peut être formée d'une tôle ou peau extérieure et d'une tôle intérieure formant caisson. La partie inférieure de porte est doublée sur sa face intérieure par un panneau d'habillage ou de garniture de porte, généralement réalisés dans une matière plastique ou composite moulée. Un rétroviseur extérieur est disposé sur la face extérieure de la porte, dans le prolongement à l'avant du bas de la baie vitrée. Le cache-rétroviseur est sur la face intérieure de la porte, également dans le prolongement à l'avant du bas de la baie vitrée. Il est surmonte la garniture de porte. Lorsque la porte est fermée, la garniture de porte vient, l'avant, c'est-à-dire dans la zone du rétroviseur et du cache-rétroviseur, jouxter l'extrémité ou joue latérale de la planche de bord. Il est important pour la qualité perçue que le jeu entre la garniture et la joue de planche soit bien fin et parallèle sur toute sa longueur, puisque ce jeu est dans le champ de vision du conducteur.

Or cette zone avant de garniture a en pratique une géométrie souvent déformée par rapport à sa géométrie théorique. D'une part, lors de sa fabrication par moulage, la partie avant supérieure de la garniture est la dernière remplie, ce qui entraîne des écarts de géométrie dès la sortie de moule. D'autre part, cette partie de garniture est relativement mince et donc aisément déformable sous les effets thermiques ; or, elle reçoit le soleil et est donc, plus que d'autres parties, sujette à déformation. Ces effets sont d'autant plus sensibles qu'on utilise de préférence des plastiques non chargés pour atteindre l'objectif de gain de poids, et que ces plastiques se déforment plus que les plastiques chargées.

La garniture de porte est fixée à la structure de porte en un certain nombre de zones ; par exemple le long de la partie basse de la baie vitrée prévue dans la porte, la garniture peut être fixée géométriquement par l'engagement d'un bord retourné ou clé de la garniture dans un sillon forme dans le joint lécheur de vitre, lequel chevauche les bords rapprochées des tôles formant le caisson de porte.

Néanmoins, pour des questions de géométrie et d'encombrement lié aux organes de manoeuvre et de commande du rétroviseur, la partie avant supérieure de la garniture n'est généralement pas fixée à la structure dans la zone située sous le cache-rétroviseur, cette zone sans fixation pouvant s'étendre sur 10 à 25 cm dans le sens longitudinal et dans le sens vertical. Cette absence de fixation fait qu'il est en pratique difficile d'observer la finesse et le parallélisme souhaités pour le jeu entre le panneau de garniture et la joue de planche de bord, du fait des déformations géométriques évoquées plus haut.

On a parfois tenté de pallier ce défaut en prévoyant une fixation supplémentaire par vis traversante dans la zone contiguë à la joue de planche de bord. Maïs cette vis, cachée quand la porte est fermée, devient visible et peu esthétique quand la porte est ouverte,

Le document JP2007126070A décrit une porte avant de véhicule selon le préambule de la revendication 1.

Le but de l'invention est d'obtenir une bonne qualité de jeu entre le panneau de garniture et la joue de planche de bord sans dégrader l'esthétique.

Selon la revendication 1 l'invention atteint son but grâce à une porte avant de véhicule constituée d'une structure définissant d'une part une baie supérieure obturable par une vitre coulissante et d'autre part une partie inférieure de porte, sous la baie, ladite, partie inférieure étant doublée du côté intérieur par un panneau d'habillage de porte, un cache-rétroviseur étant prévu sur le côté intérieur de porte dans le prolongement avant du bas de baie vitrée, au-dessus du panneau d'habillage, le cache-rétroviseur étant monté sur une interface de montage moulée à la partie supérieure avant du panneau d'habillage, caractérisé en ce que l'interface de montage comporte de moulage une zone d'agrafage formée d'une paroi d'accostage moulée parallèle à une bordure de tôle appartenant à la structure de porte dans cette zone, et en ce qu'un cavalier est passé sur la paroi d'accostage et la bordure de tôle contiguë pour les maintenir ensemble.

Avantageusement, Il bordure de tôle appartient à une tôle intérieure d'un montant avant de cadre de porte entourant la baie vitrée. Il s'agit d'une bordure de tôle entourant un passage réalisé dans la tôle pour les éléments de commande du rétroviseur.

Avantageusement, le cavalier est une agrafe métallique dotée de barbes anti-arrachement.

Avantageusement, la paroi d'accostage est formée dans un doigt d'agrafage formé par une saillie en hauteur de l'interface de montage.

Le doigt d'agrafage a de préférence la forme d'une cornière en L disposée obliquement vers le haut et vers l'arrière, avec une aile formant ladite paroi d'accostage.

De préférence, la paroi d'accostage est bordée par une paroi d'extrémité et par une paroi de pied, ce qui permet de renforcer la paroi d'accostage moulée

Une place suffisante est ménagée à l'arrière de la paroi d'accostage pour permettre à un monteur de passer le cavalier qui doit maintenir ensemble la paroi d'accostage et la bordure de la tôle intérieure.

D'autres caractéristiques et avantages de l'invention ressortiront de la description suivante d'un exemple de réalisation. Il sera fait référence aux dessins annexés sur lesquels :
La figure 1 est une vue schématique en perspective partielle d'un avant gauche d'habitacle, montrant la position du panneau de garniture de porte par rapport à la palanche de bord.
La figure 2 est une vue en coupe horizontale II-II de la figure 1.
La figure 3 est une vue en perspective agrandie du détail de réalisation du haut de la garniture de porte avec sa zone d'agrafage.
La figure 4 est une vue analogue à celle de la figure 3 montrant le placement de l'agrafe sur la zone d'agrafage et la bordure de tôle adjacente.

On a indiqué sur toutes les figures le trièdre de référence XYZ, X pointant vers la direction longitudinale arrière, Y la direction transversale et Z la direction verticale.

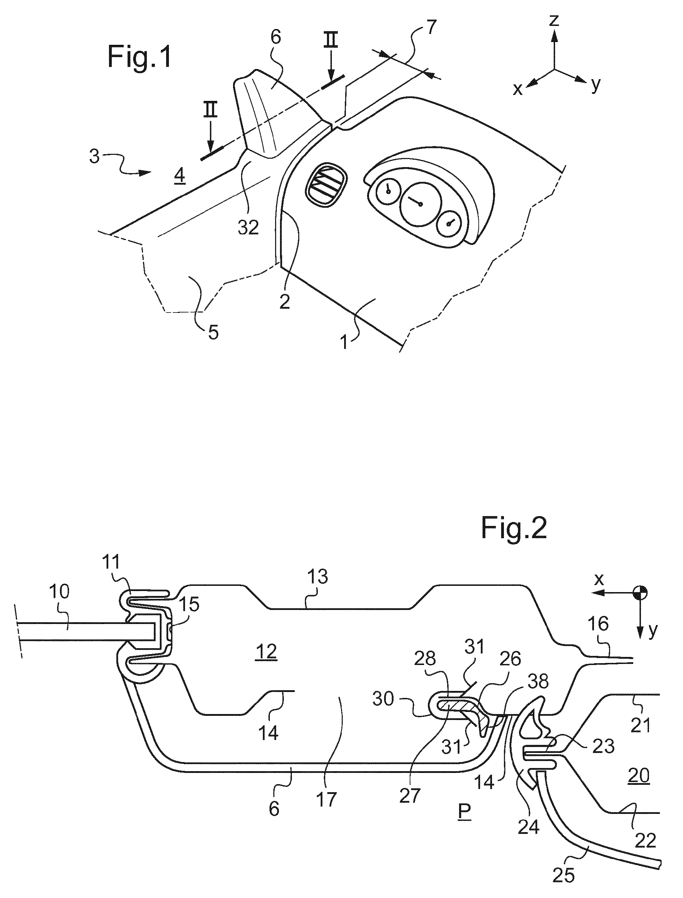

On voit sur la figure 1 l'extrémité gauche d'une planche de bord transversale 1 se terminant par une joue latérale 2 faisant face à une porte latérale avant 3. La porte 3 a une structure comprenant un cadre de porte et une tôle extérieure formant caisson, non représentés sur la figure 1. Le cadre de porte définit notamment la baie 4 obturable par une vitre 10 (cf; figure 2). La partie inférieure de porte est doublée à l'intérieur par le panneau moulé de garniture 5. Dans le prolongement avant du bas de la baie 4, on voit le cache-rétroviseur 6 monté au-dessus du panneau de garniture 5 par une interface qui sera décrite plus loin. Quand la porte 3 est fermée, comme dans la position représentée sur la figure 1, la garniture 5 fait avec la joue 2 un jeu 7 qu'on souhaite bien parallèle et mince.

La figure 2 montre le détail de la porte 3 au niveau d'une coupe horizontale prise à un niveau juste au dessus de la garniture de porte 5. On y voit la vitre 10 qui peut obturer la baie 4 et qui coulisse dans un joint de coulisse vertical 11 placé sur le long du montant avant vertical 12 du cadre de porte. Ce montant 12 est, comme tout le cadre lui-même, un caisson formé par une tôle extérieure 13 et une tôle intérieure 14. Les tôles extérieure 13 et intérieure 14 forment du côté de la vitre 10 un logement en U destiné à recevoir le joint 11 et le bord de la vitre 10, et de l'autre côté deux feuillures adjacentes 16. La tôle extérieure 13 reçoit les bossages et orifices nécessaires pour la fixation du rétroviseur extérieur. La tôle intérieure 14 comporte un orifice 17 d'assez grandes dimensions, de forme plus ou moins triangulaire arrondie, destiné au passage des connexions et commandes du rétroviseur. La tôle intérieure 14 est recouverte dans cette zone par le cache-rétroviseur 6. La porte vient se fermer dans l'ouverture de porte de la caisse du véhicule, dont on voit ici le montant vertical de baie avant 20, consistant en un caisson formé de tôles extérieure 21 et intérieure 22 réunies au niveau d'une feuillure marginale 23 chevauchée par un joint d'étanchéité 24 qui compère avec la porte ; une ébénisterie intérieure 25 recouvre le montant de baie 20 du côté intérieur de l'habitacle.

On a représenté sur la figure 2 la coupe sensiblement en L du doigt d'agrafage 26 formé sur la partie supérieure de la garniture 5 comme on le verra plus en détail plus loin. Ce doigt 26 forme une paroi d'accostage sensiblement verticale 27 située dans un plan vertical longitudinal, adjacente à une bordure verticale ou oblique 28 formée par la tôle intérieure 14 le long de l'ouverture 17 (la bordure 28 borde le côté avant de l'ouverture 17). Un cavalier métallique ou agrafe 30 comportant des barbes ou lames anti-extraction 31 (dirigées vers l'arrière) chevauche les deux épaisseurs formées par la paroi d'accostage 27 et la bordure verticale 28 et maintiennent ainsi ces deux épaisseurs ensemble dans la direction Y. Des agrafes métalliques avec des lames anti-extraction sont connues en elles-mêmes par le document FR2905430.

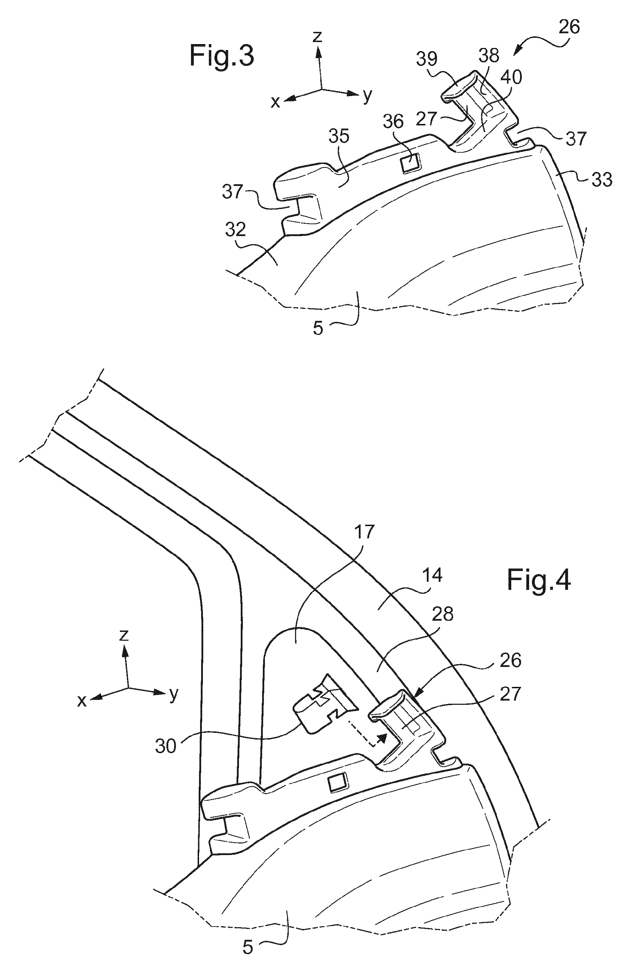

On a représenté sur la figure 3 le détail de réalisation du doigt d'agrafage 26 sur la garniture moulée 5. La garniture 5 comprend à sa partie supérieure une partie supérieure de rebord 32 à section transversale plus ou moins horizontale et légèrement arrondie dans la direction longitudinale. Cette partie de rebord 32 vient mourir sur la bordure verticale 33 de la garniture ; on voit sur la figure 3 que cette partie 33 est moins épaisse que le reste du panneau de garniture, ce qui la rend plus sensible encore aux déformations évoquées en tête de ce mémoire. Pour pouvoir recevoir et fixer le cache-rétroviseur 6 qui la surmonte dans cette zone, le rebord 32 de garniture comporte une interface de montage 35, venue de moulage, et se présentant sous la forme d'une nervure verticale longitudinale dans laquelle sont prévus des reliefs de coopération avec le cache-rétroviseur 6, tels qu'un trou carré 36 pilote de positionnement et deux reliefs d'encliquetage 37.

Le doigt d'agrafage 26 est formé par une excroissance venue de moulage avec l'interface de montage 35. Compte tenu de la géométrie environnante et notamment de la forme de l'ouverture 17, et plus particulière de la bordure verticale 28, disposée obliquement, le doigt 26 prend la forme d'une cornière en L disposée obliquement vers l'arrière, avec une aile 27 formant la paroi d'accostage et une aile 38 à 90°. La paroi d'accostage 27 est bordée par une paroi d'extrémité 39 et par une paroi de pied 40. Une place suffisante est ménagée à l'arrière de la paroi 27 pour permettre à un monteur de passer le cavalier 30 qui doit maintenir ensemble la paroi d'accostage 27 et la bordure 28 de la tôle intérieure 14.

Le doigt 26 est d'un faible encombrement. Comme indiqué sur la figure 2, son encombrement P dans la direction X est d'environ 20 mm, son encombrement L en direction transversal est d'environ 12 mm et son encombrement en direction vertical est d'environ 25 mm. La fixation est invisible une fois le cache-rétroviseur 6 monté. La fixation se fait précisément à l'endroit qui en a le plus besoin et permet de maintenir le jeu 7 fin (environ 5 mm) et parallèle.

La figure 4 montre comment se place l'agrafe 30 : en passant par l'ouverture 17, on vient disposer l'agrafe 30 à cheval sur la paroi d'aile 27 du doigt 26 et sur la bordure 28 de la tôle 14.

## Revendications

1. Porte avant (3) de véhicule constituée d'une structure (13, 14) définissant d'une part une baie supérieure (4) obturable par une vitre coulissants (10) et d'autre part une partie inférieure de porte, sous la baie (4), ladite partie inférieure étant doublée du côté intérieur par un panneau (5) d'habillage de porte, un cache-rétroviseur (6) étant prévu sur le côté intérieur de porte dans le prolongement avant du bas de baie vitrée (4), au-dessus du panneau d'habillage (5), le cache-rétroviseur (6) étant monté sur une interface de montage (35) moulée à la partie supérieure avant du panneau d'habillage (5), **caractérisé en ce que** l'interface de montage (35) comporte de moulage une zone d'agrafage formée d'une paroi d'accostage (27) moulée, parallèle à une bordure de tôle (28) appartenant à la structure de porte (13, 14) dans cette zone, et **en ce qu'**un cavalier (30) est passé sur la paroi d'accostage (27) et la bordure de tôle (28) contiguë pour les maintenir ensemble.

2. Porte avant (3) selon la revendication 1, **caractérisée en ce que** la bordure de tôle (28) appartient à une tôle intérieure (14) d'un montant avant (12) de cadre de porte entourant la baie vitrée (4).

3. Porte avant (3) selon la revendication 2, **caractérisée en ce que** la bordure de tôle (28) entoure un passage (17) réalisé dans la tôle (14) pour les éléments de commande du rétroviseur.

4. Porte avant (3) selon l'une quelconque des revendications 1 à 3, **caractérisée en ce que** le cavalier (30) est une agrafe métallique dotée de barbes anti-arrachement (31).

5. Porte avant (3) selon l'une quelconque des revendications 1 à 4, **caractérisée en ce que** la paroi d'accostage (27) est formée dans un doigt d'agrafage (26) formé par une saillie en hauteur de l'interface de montage (35).

6. Porte avant (3) selon la revendication 5, **caractérisée en ce que** le doigt d'agrafage (26) a la forme d'une cornière en L disposée obliquement vers le haut et vers l'arrière, avec une aile formant ladite paroi d'accostage (27).

7. Porte avant (3) selon la revendication 6, **caractérisée en ce que** la paroi d'accostage (27) est bordée par une paroi d'extrémité (39) et par une paroi de pied (40).

8. Porte avant (3) selon la revendication 7, **caractérisée en ce qu'**une place suffisante est ménagée à l'arrière de la paroi d'accostage (27) pour permettre à un monteur de passer le cavalier (30) qui doit maintenir ensemble la paroi d'accostage (27) et la bordure (28) de la tôle intérieure.

## Patentansprüche

1. Fahrzeug-Vordertür (3), welche von einer Struktur (13, 14) gebildet wird, die einerseits eine durch eine verschiebbare Fensterscheibe (10) verschließbare Fensteröffnung (4) und andererseits einen unteren Türabschnitt unter der Fensteröffnung (4) definiert, wobei der untere Abschnitt durch eine Türverkleidungsplatte (5) verkleidet ist, wobei eine Rückspiegelverkleidung (6) an der Türinnenseite in der vorderen Verlängerung des unteren Teils der verglasten Fensteröffnung (4) oberhalb der Verkleidungsplatte (5) vorgesehen ist, wobei die Rückspiegelverkleidung (6) auf einer Montageschnittstelle (35) montiert ist, welche an den oberen, vorderen Abschnitt der Verkleidungsplatte (5) angeformt ist, **dadurch gekennzeichnet, dass** die Montageschnittstelle (35) vom Formguss einen Klammerbereich aufweist, welcher von einer angeformten Anlegewand (27) gebildet wird, die parallel zu einem zu der Struktur der Tür (13, 14) in diesem Bereich gehörenden Blechrand (28) verläuft, und dass ein Reiter (30) über die Anlegewand (27) und den angrenzenden Blechrand (28) geschoben wird, um sie zusammen zu halten.

2. Vordertür (3) nach Anspruch 1, **dadurch gekennzeichnet, dass** der Blechrand (28) zu einem Innenblech (14) eines vorderen Pfostens (12) eines die verglaste Fensteröffnung (4) umgebenden Türrahmens gehört.

3. Vordertür (3) nach Anspruch 2, **dadurch gekennzeichnet, dass** der Blechrand (28) einen in dem Blech (14) ausgeführten Durchlass (17) für die Betätigungselemente des Rückspiegels umgibt.

4. Vordertür (3) nach einem der Ansprüche 1 bis 3, **dadurch gekennzeichnet, dass** der Reiter (30) eine Metallklammer ist, welche mit Lamellen zum Abziehschutz (31) versehen ist.

5. Vordertür (3) nach einem der Ansprüche 1 bis 4, **dadurch gekennzeichnet, dass** die Anlegewand (27) in einem Klammerfinger (26) ausgebildet ist, welcher durch einen Vorsprung in der Höhe von der Montageschnittstelle (35) ausgebildet ist.

6. Vordertür (3) nach Anspruch 5, **dadurch gekennzeichnet, dass** der Klammerfinger (26) die Form eines L-förmigen Profilwinkels besitzt, welcher schräg zum Verbindungsteil und nach hinten mit einem Flügel angeordnet ist, welcher die Anlegewand (27) bildet.

7. Vordertür (3) nach Anspruch 6, **dadurch gekennzeichnet, dass** die Anlegewand (27) von einer Endwand (39) und einer Fußwand (40) begrenzt wird.

8. Vordertür (3) nach Anspruch 7, **dadurch gekennzeichnet, dass** ein ausreichender Platz hinter der Anlegewand (27) vorgesehen ist, um es einem Monteur zu ermöglichen, den Reiter (30) aufzuschieben, welcher die Anlagewand (27) und den Rand (28) des Innenblechs zusammenhalten muss.

## Claims

1. Vehicle front door (3) consisting of a structure (13, 14) defining, on the one hand, an upper opening (4) which can be closed by a sliding window (10) and, on the other hand, a lower door part, below the opening (4), said lower part being lined on the inner side by a door trim panel (5), a rear-view mirror cover (6) being provided on the inner side of the door in the front extension of the bottom of the glazed opening (4), above the trim panel (5), the rear-view mirror cover (6) being mounted on a mounting interface (35) molded to the front upper part of the trim panel (5), **characterized in that** the mounting interface (35) comprises, by way of molding, a stapling zone formed by a molded docking wall (27), parallel to a sheet metal edge (28) belonging to the door structure (13, 14) in this zone, and **in that** a clip (30) is passed over the docking wall (27) and the contiguous sheet metal edge (28) to hold them together.

2. Front door (3) according to Claim 1, **characterized in that** the sheet metal edge (28) belongs to an inner metal sheet (14) of a door frame front pillar (12) surrounding the glazed opening (4).

3. Front door (3) according to Claim 2, **characterized in that** the sheet metal edge (28) surrounds a passage (17) made in the metal sheet (14) for the elements for controlling the rear-view mirror.

4. Front door (3) according to any one of Claims 1 to 3, **characterized in that** the clip (30) is a metal staple equipped with anti-tear-off barbs (31).

5. Front door (3) according to any one of Claims 1 to 4, **characterized in that** the docking wall (27) is formed in a stapling finger (26) formed by a height projection of the mounting interface (35).

6. Front door (3) according to Claim 5, **characterized in that** the stapling finger (26) has the form of an L-shaped bracket arranged obliquely upward and rearward, with a wing forming said docking wall (27).

7. Front door (3) according to Claim 6, **characterized in that** the docking wall (27) is bordered by an end wall (39) and by a base wall (40).

8. Front door (3) according to Claim 7, **characterized in that** sufficient space is provided at the rear of the docking wall (27) to allow a fitter to pass through the clip (30) which is to hold together the docking wall (27) and the edge (28) of the inner metal sheet.
